# EUROPEAN PATENT APPLICATION

(11) **EP 4 489 156 A2**
(43) Date of publication of application: **08.01.2025**
(21) Application number: 23835045.8
(22) Date of filing: 07.09.2023
(51) Int. Cl.: H01M 10/04, H01M 50/516, B23K 31/00, B23K 26/03, B23K 26/066

(54) **APPARATUS FOR MANUFACTURING SECONDARY BATTERY, AND METHOD FOR MANUFACTURING SECONDARY BATTERY USING SAME**

(30) Priority: 08.07.2022 KR 20220084675; 30.06.2023 KR 20230084584
(71) Applicant: LG Energy Solution, Ltd., Seoul 07335 (KR)
(72) Inventor: KANG, Min Jae, Daejeon 34122 (KR); LEE, Chang Je, Daejeon 34122 (KR); OH, Na Hee, Daejeon 34122 (KR)
(74) Representative: BCKIP Part mbB
(86) International application number: PCT/IB2023/058838
(87) International publication number: WO 2024/009287

(57) **Abstract**

Discussed is an apparatus for manufacturing a secondary battery. The apparatus can include a masking jig which is configured to secure electrode leads and bus bars and includes a plurality of inner walls defining an opening exposing the electrode leads and the bus bars; a first beam source configured to generate a welding beam; a second beam source configured to generate an inspection beam; a scanner head configured to direct the welding beam and the inspection beam to the electrode leads and the bus bars; a detector; a processor; and a controller.

## Description

### [Cross-reference to Related Application]

This application claims the benefit of priority based on Korean Patent Application No. 10-2022-0084675, filed on July 8, 2022 and Korean Patent Application No. 10-2023-0084584, filed on June 30, 2023, where the entire contents of the Korean patent applications are incorporated herein by reference.

### [Technical Field]

The present invention relates to an apparatus for manufacturing a secondary battery and a method of manufacturing a secondary battery using the same.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Cell manufacturers are paying huge capital expenditures to meet the growth of steep demand for secondary batteries for mobility. Companies are increasing productivity per line to maximize the return on invested capital, and to this end, various researches are continuously being conducted to improve yield and productivity.

### [Disclosure]

### [Technical Problem]

A technical idea of the present invention is directed to providing an apparatus for manufacturing a secondary battery with improved productivity and a method of manufacturing a secondary battery using the same.

### [Technical Solution]

To address the above problem, embodiments of the present invention provide an apparatus for manufacturing a secondary battery. The apparatus includes a masking jig configured to fix an electrode lead and a bus bar and including a plurality of inner walls defining an opening exposing the electrode lead and the bus bar, a first beam source configured to generate a welding beam, a second beam source configured to generate an inspection beam, a scanner head configured to direct the welding beam and the inspection beam to the electrode lead and the bus bar, a servo motor configured to move the scanner head, a detector configured to detect a reflective beam that is part of the inspection beam reflected from the electrode lead and the bus bar, a processor configured to collect opening data, based on an inspection signal generated by the detector, the opening data including first coordinates of a first inner wall and second coordinates of a second inner wall among the plurality of inner walls, and a controller configured to control the servo motor, based on the opening data of the electrode lead and the bus bar.

The processor may be further configured to calculate coordinates of a center line of the opening, based on the opening data.

The coordinates of the center line of the opening may be averages of the first coordinates of the first inner wall and the second coordinates of the second inner wall.

The controller may be further configured to correct welding positions of the electrode lead and the bus bar, based on the coordinates of the center line.

The welding positions may be positions of portions of the electrode lead and the bus bar to be welded by the welding beam.

A length of the opening may be greater than a width of the electrode lead.

The scanner head may be further configured to scan the electrode lead and the bus bar by the welding beam along a plurality of spiral lines.

A center of each of the plurality of spiral lines may be on the center line of the opening of the masking jig.

According to embodiments, a method of manufacturing a secondary battery is provided. The method includes scanning a bus bar and an electrode lead through an opening of a masking jig, correcting coordinates of welding positions of the bus bar and the electrode lead to calculate corrected welding positions, and welding the bus bar and the electrode lead, based on the corrected welding positions, wherein the masking jig is configured to press the electrode lead and the bus bar.

The masking jig may include a first inner wall and a second inner wall defining the opening.

Lengths of the first and second inner walls may be greater than a width of the electrode lead.

The scanning of the bus bar and the electrode lead may include collecting opening data about the opening of the masking jig.

The opening data may include first coordinates of the first inner wall of the opening and second coordinates of the second inner wall of the opening.

The welding positions may be corrected based on center line data including coordinates of a center line of the masking jig.

The center line data may be collected based on the opening data.

The coordinates of the center line may be averages of the first coordinates of the first inner wall and the second coordinates of the second inner wall.

The corrected welding positions may be on the center line.

The method may further include determining a defect of the electrode lead, based on a three-dimensional image of the bus bar and the electrode lead.

The three-dimensional image of the bus bar and the electrode lead may be captured by scanning the bus bar and the electrode lead by an inspection beam.

The opening may include a first portion exposing a surface of the bus bar and a second portion exposing a surface of the electrode lead, and the defect of the electrode lead may be determined based on a difference between a depth measured in the first portion and a depth measured in the second portion.

According to embodiments, a method of manufacturing a secondary battery is provided. The method includes: scanning a bus bar and an electrode lead through an opening of a masking jig by an inspection beam, wherein the masking jig includes a first inner wall and a second inner wall defining the opening; and monitoring contamination of the masking jig, based on profiles of the first and second inner walls.

The contamination of the masking jig may be monitored based on roughness of the profiles of the first and second inner walls.

The contamination of the masking jig may be monitored based on a distance between the first and second inner walls.

An optical path of the welding beam and an optical path of the inspection beam may overlap in the scanner head.

### [Advantageous Effects]

In methods of manufacturing a secondary battery according to embodiments of the present invention, opening data and center line data of components can be collected based on optical coherence tomography (OCT), and a bus bar and an electrode lead can be welded based on the opening data and the center line data. Three-dimensional shapes of components can be determined by OCT and thus there is no error due to surface roughness. In addition, because an OCT optical system can be coupled to a scanner head of a welding beam optical system, a travel time of the scanner head required to perform autofocusing and inspect a central part can be minimized, thereby improving the productivity of secondary batteries.

Effects achievable from embodiments of the present invention are not limited to the above-described effects, and other effects that are not described herein will be clearly derived and understood by those of ordinary skilled in the art to which the embodiments of the present disclosure pertain from the following description. That is, unintended effects achieved when the embodiments of the present disclosure are implemented are derivable by those of ordinary skilled in the art from the embodiments of the present disclosure.

### [Brief Description of the Drawings]

FIG. 1 is a diagram illustrating a secondary battery manufacturing apparatus according to embodiments.
FIG. 2 is a perspective view of a masking jig.
FIG. 3 is a plan view of a masking jig.
FIG. 4 is a flowchart of a method of manufacturing a secondary battery according to embodiments.
FIG. 5 is a diagram for describing a method of manufacturing a secondary battery according to embodiments.
FIG. 6 is a diagram for describing a method of manufacturing a secondary battery according to embodiments.
FIG. 7 is a flowchart of a method of manufacturing a secondary battery according to embodiments.

### [Embodiments of the Present Invention]

Hereinafter, embodiments of the present disclosure will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention based on the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

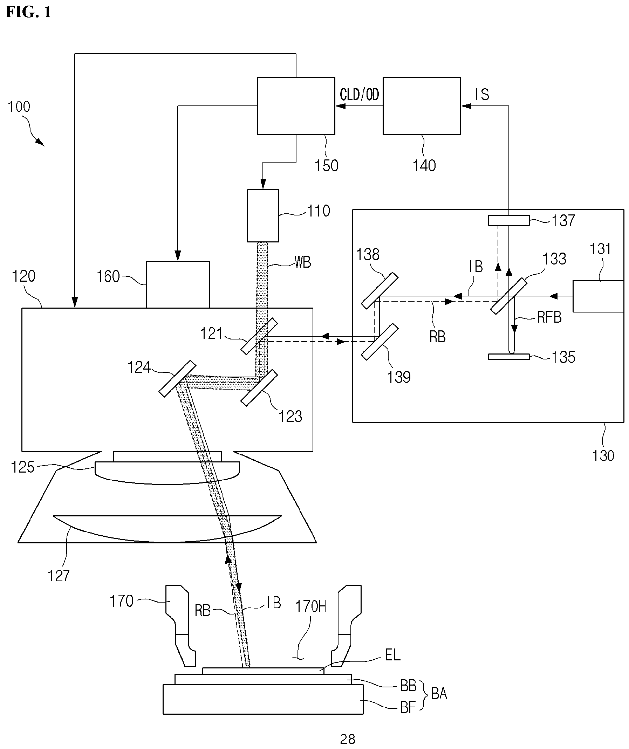

FIG. 1 is a diagram illustrating a secondary battery manufacturing apparatus 100 according to embodiments.

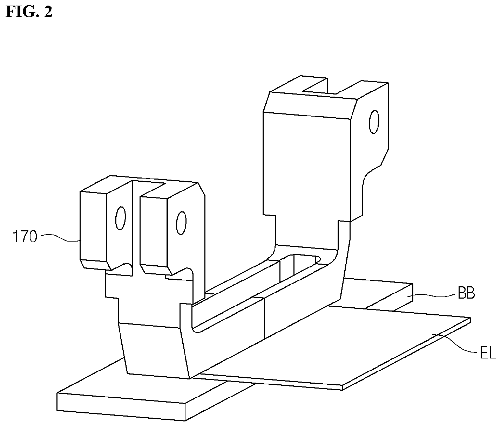

FIG. 2 is a perspective view of a masking jig 170.

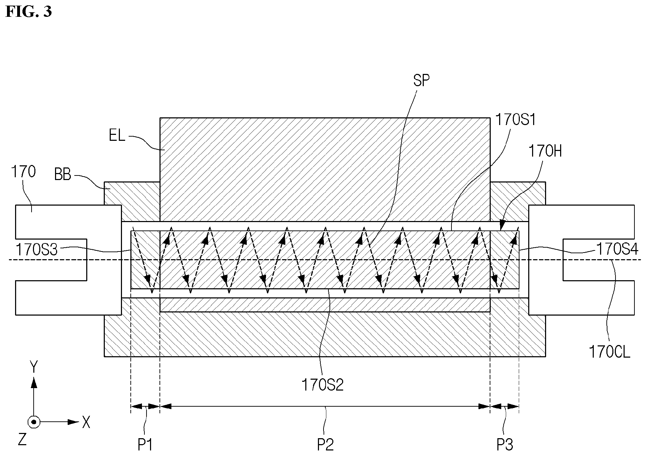

FIG. 3 is a plan view of the masking jig 170.

Referring to FIGS. 1 to 3, according to embodiments, the secondary battery manufacturing apparatus 100 may include a first beam source 110, a scanner head 120, an optical coherence tomography (OCT) optical system 130, a processor 140, a controller 150, a servo motor 160, and a masking jig 170.

The secondary battery manufacturing apparatus 100 may be configured to process electrode leads EL and a bus bar BB. The secondary battery manufacturing apparatus 100 may be configured to perform laser welding. The secondary battery manufacturing apparatus 100 may be configured to weld the electrode leads EL and the bus bar BB.

The first beam source 110 may be a light amplification by stimulated emission of radiation (laser) device. The first beam source 110 may be configured to generate a welding beam WB. The welding beam WB may be a laser beam. According to embodiments, the welding beam WB may be a near-infrared ray. According to embodiments, a wavelength of the welding beam WB may be in a range of about 750 nm to about 2500 nm. According to embodiments, the wavelength of the welding beam WB may be about 1070 nm.

For example, the first beam source 110 may be a solid laser device such as a semiconductor laser device, an Nd:YAG laser device, a titanium-saphire laser device, and an optical fiber laser device. As another example, the first beam source 110 may be a liquid laser such as a pigment laser device. As another example, the first beam source 110 may be a gas laser device such as a helium-neon laser, a carbon dioxide laser, or an excimer laser.

The welding beam WB generated by the first beam source 110 may be coupled to the scanner head 120. According to embodiments, the welding beam WB may be transmitted to the scanner head 120 through one of free space optics, an optical integrated circuit, and a fiber optical system.

The OCT optical system 130 may include a second beam source 131, a beam splitter 133, a reference mirror 135, a detector 137, a first scanning mirror 138, and a second scanning mirror 139.

The OCT optical system 130 may be configured to capture a three-dimensional (3D) image of the electrode leads EL and the bus bar BB. The OCT optical system 130 may be based on a Michelson interferometer. An operation of the OCT optical system may be based on a phase delay between a reference beam RFB and a reflective beam RB. The phase delay represents the difference in a time of flight between the reflective beam RB and the reference beam RFB, and the difference in flight time may include information about the 3D image of the electrode leads EL and the bus bar BB. The reflective beam RB may be a part of an inspection beam IB reflected from a sample (i.e., the electrode leads EL and the bus bar BB). By scanning surfaces of the electrode leads EL and the bus bar BB by the inspection beam IB, depth profiles of the scanned electrode leads EL and the bus bar BB (i.e., depths according to coordinates of the electrode leads EL and the bus bar BB in an X-axis direction and a Y-axis direction ) may be obtained and thus a 3D image of the electrode leads EL and the bus bar BB may be captured. Here, the depths are coordinates on an uppermost surface of an assembly of the electrode leads EL and the bus bar BB in a Z-axis direction.

Here, the X-axis direction and the Y-axis direction are substantially parallel to the surface of the bus bar BB, and the Z-axis direction is substantially perpendicular to the surface of the bus bar BB. The X-axis direction, the Y-axis direction, and the Z-axis direction may be substantially perpendicular to one another.

The X-axis direction, the Y-axis direction, and the Z-axis direction may be defined with respect to an opening 170H of the masking jig 170. For example, the Z-axis direction may be a direction of depth of the opening 170H of the masking jig 170, the X-axis direction may be a direction in which first and second inner walls 170S1 and 170S2 defining the opening 170H extend, and the Y-axis direction may be a direction in which third and fourth inner walls 170S3 and 170S4 defining the opening 170H extend.

The second beam source 131 may be a laser device. The second beam source 131 may be configured to generate an inspection beam IB. The inspection beam IB may be a laser beam. According to embodiments, the inspection beam IB may be a near-infrared ray. According to embodiments, a wavelength of the inspection beam IB may be in a range of about 750 nm to about 2500 nm. According to embodiments, the wavelength of the inspection beam IB may be different from that of the welding beam WB. According to embodiments, the wavelength of the inspection beam IB may be shorter than that of the welding beam WB. According to embodiments, the wavelength of the inspection beam IB may be about 820 nm.

According to embodiments, the inspection beam IB may be collimated. According to embodiments, the inspection beam IB may be parallel light. That is, the inspection beam IB may be non-converged light and non-emissive light. According to embodiments, the second beam source 131 may include a collimating lens or a collimating lens may be interposed between the second beam source 131 and the beam splitter 133.

The beam splitter 133 may be in an optical path of the inspection beam IB between the scanner head 120 and the second beam source 131. The inspection beam IB may be transmitted to the beam splitter 133. The beam splitter 133 may be configured to divide the inspection beam IB. As a non-limiting example, the beam splitter 133 may be configured to transmit through a part of the inspection beam IB and reflect a part of the inspection beam IB to generate the reference beam RFB. A reflectance of the beam splitter 133 may be substantially the same as a transmittance thereof but embodiments are not limited thereto. The reflectance of the beam splitter 133 may be higher than or lower than the transmittance thereof.

The reference beam RFB may be reflected by the reference mirror 135, transmitted through the beam splitter 133, and transmitted to the detector 137. The inspection beam IB transmitted through the beam splitter 133 may sequentially pass through the first and second scanning mirrors 138 and 139 and thereafter be coupled to the scanner head 120.

The first scanning mirror 138 may be in an optical path of the inspection beam IB between the beam splitter 133 and the scanner head 120. The second scanning mirror 139 may be in an optical path of the inspection beam IB between the first scanning mirror 138 and the scanner head 120. Each of the first and second scanning mirrors 138 and 139 may be a galvo mirror. Each of the first and second scanning mirrors 138 and 139 may include a reflective surface and a servo motor configured to drive (e.g., rotatably drive) the reflective surface. The electrode leads EL and the bus bar BB may be scanned by the inspection beam IB by driving the first and second scanning mirrors 138 and 139.

The scanner head 120 may include a dichroic mirror 121, a first scanning mirror 123, a second scanning mirror 124, and lenses 125 and 127. The scanner head 120 may be configured to direct the welding beam WB and the inspection beam IB to the electrode leads EL and the bus bar BB. Accordingly, the electrode leads EL and the bus bar BB may be inspected by the inspection beam IB and welded by the welding beam WB. The scanner head 120 may scan the electrode leads EL and the bus bar BB with the welding beam WB and the inspection beam IB.

The inspection beam IB and the welding beam WB coupled to the scanner head 120 may be transmitted to the dichroic mirror 121. The dichroic mirror 121 may be in an optical path between the first beam source 110 and a stack or an assembly of the electrode leads EL and the bus bar BB. The dichroic mirror 121 may be in an optical path between the second scanning mirror 139and the stack or the assembly of the electrode leads EL and the bus bar BB. An optical path of the inspection beam IB reflected by the dichroic mirror 121 may be similar to or be substantially the same as that of the welding beam WB transmitted through the dichroic mirror 121. An optical axis of the inspection beam IB reflected by the dichroic mirror 121 and an optical axis of the welding beam WB transmitted through the dichroic mirror 121 may at least partially overlap each other. Accordingly, auto-focusing of the welding beam WB by the inspection beam IB may be achieved. As a non-limiting example, the dichroic mirror 121 may include a distributed Bragg reflector.

The dichroic mirror 121 may have a high transmittance with respect to the welding beam WB. For example, a transmittance of the dichroic mirror 121 with respect to a wavelength band of the welding beam WB may be 90% or more. For example, the transmittance of the dichroic mirror 121 with respect to the wavelength band of the welding beam WB may be 95% or more. For example, the transmittance of the dichroic mirror 121 with respect to the wavelength band of the welding beam WB may be 99% or more.

The dichroic mirror 121 may have a high reflectivity with respect to the inspection beam IB. For example, a reflectance of the dichroic mirror 121 with respect to a wavelength band of the inspection beam IB may be 90% or more. For example, the reflectance of the dichroic mirror 121 with respect to the wavelength band of the inspection beam IB may be 95% or more. For example, the reflectance of the dichroic mirror 121 with respect to the wavelength band of the inspection beam IB may be 99% or more.

The inspection beam IB reflected by the dichroic mirror 121 and the welding beam WB transmitted through the dichroic mirror 121 may sequentially pass through the first scanning mirror 123, the second scanning mirror 124, and the lenses 125 and 127 and thereafter be emitted to the electrode leads EL and the bus bar BB. However, embodiments are not limited thereto, and the dichroic mirror 121 may be configured to reflect the welding beam WB and transmit the inspection beam IB. In this case, the dichroic mirror may have a high reflectance with respect to a wavelength band of the welding beam WB and a high transmittance with respect to a wavelength band of the inspection beam IB.

The first scanning mirror 123 may be in an optical path of the inspection beam IB and the welding beam WB between the dichroic mirror 121and the stack or the assembly of the electrode leads EL and the bus bar BB. The second scanning mirror 124 may be in an optical path of the inspection beam IB and the welding beam WB between the first scanning mirror 123 and the stack or the assembly of the electrode leads EL and the bus bar BB. The first and second scanning mirrors 123 and 124 may be galvo mirrors. Each of the first and second scanning mirrors 123 and 124 may include a reflective surface and a servo motor configured to drive (e.g., rotatably drive) the reflective surface. The electrode leads EL and the bus bar BB may be scanned by the inspection beam IB and the welding beam WB by driving the first and second scanning mirrors 123 and 124.

According to embodiments, the first and second scanning mirrors 123 and 124 may be configured to scan the electrode leads EL and the bus bar BB with the inspection beam IB in addition to the welding beam WB, and thus, the first and second scanning mirrors 138 and 139 may be omitted or replaced with non-galvo mirrors (i.e., non-driven fixed mirrors).

Each of the lenses 125 and 127 may be a scanning lens. For example, one of the lenses 125 and 127 may be an F-Theta scanning lens but embodiments are not limited thereto. One of the lenses 125 and 127 may be a flat-field scanning lens or a telecentric F-theta scanning lens.

An F-theta lens is a standard lens for a laser tooling systems based on galvo scanners. A diffraction limit, multi-elements and air-spaced lens design are optimized for flat fields and low F-theta distortion on an image plane. A displacement of an output beam in the F-theta lens is f*θ. Here, θ is an incident angle of an input beam, and f is a focal length. Therefore, angular velocities of the input beam and the output beam may be directly proportional to each other, thus allowing an operation of the scanning mirror at a constant angular velocity and simplifying a control device.

Although FIG. 1 illustrates both the inspection beam IB and the welding beam WB for convenience of illustration, the inspection beam IB and the welding beam WB may be separately emitted to the electrode leads EL and the bus bar BB. For example, after the electrode leads EL and the bus bar BB are inspected by the inspection beam IB, elements of the electrode leads EL and the bus bar BB may be welded by the welding beam WB.

An area of the welding beam WB on the electrode leads EL and the bus bar BB may be different from an area of the inspection beam IB on the electrode leads EL and the bus bar BB. The area of the welding beam WB on the electrode leads EL and the bus bar BB may be larger than the area of the inspection beam IB on the electrode leads EL and the bus bar BB. The welding beam WB covers large areas of the electrode leads EL and the bus bar BB, and thus a throughput of the secondary battery manufacturing apparatus 100 may be enhanced. The inspection beam IB covers narrow areas of the electrode leads EL and the bus bar BB (i.e., a narrow field of view (FOV)), and thus a resolution of 3D modeling of the electrode leads EL and the bus bar BB by the OCT optical system 130 may be enhanced.

The electrode leads EL may be output terminals of a plurality of battery cells of a battery cell assembly. The batter cell assembly may include the plurality of battery cells and a plurality of cell separators such as PU (Poly Urethane) pad. The plurality of battery cells may include a case, an electrode assembly, an electrolyte, and the electrode leads EL. The case may be a pouch case, a cylindrical case, or a prismatic case. The electrode assembly may be a jelly-roll type electrode assembly or a stack type electrode assembly. The jelly roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween, which are stacked sequentially. The electrode leads EL may be connected to a positive electrode tab or a negative electrode tab.

Battery cells connected in parallel among the plurality of battery cells may form a plurality of banks. The plurality of banks may be connected in series. The number of battery cells connected in parallel in each of the plurality of banks may be determined according to a current to be output through the battery cell assembly. The number of banks connected in series may be determined according to a voltage to be output through the battery cell assembly.

The plurality of cell separators may horizontally support the plurality of battery cells to prevent swelling of the plurality of battery cells. According to embodiments, the plurality of cell separators may be thermal barriers.

A bus bar assembly BA may include a bus bar frame BF and a bus bar BB. The bus bar BB may be an external connection terminal for outputting a voltage and a current of the battery cell assembly, and be coupled to the electrode leads EL of the battery cell assembly. The bus bar frame BF may support the bus bar BB and the electrode leads EL of the battery cell assembly. The bus bar assembly BA may further include an integrated circuit such as a cell management controller (CMC) mounted on the bus bar frame BF.

The bus bar BB and the electrode lead EL may be pressurized by the masking jig 170. A contact between the bus bar BB and the electrode lead EL may be maintained before the welding of the bus bar BB and the electrode lead EL, because the bus bar BB and the electrode lead EL are pressurized by the masking jig 170 and the bus bar frame BF.

The masking jig 170 may include an opening 170H exposing the bus bar BB and the electrode lead EL. A planar shape of the opening 170H may be roughly a rectangular shape. The planar shape of the opening 170H may include round corners but is not limited thereto.

The masking jig 170 may include first to fourth inner walls 170S1, 170S2, 170S3, and 170S4 defining the opening 170H. The first to fourth inner walls 170S1, 170S2, 170S3, and 170S4 may surround the opening 170H. The first and second inner walls 170S1 and 170S2 may be substantially parallel to the X-axis direction. The third and fourth inner walls 170S3 and 170S4 may be substantially parallel to the Y-axis direction.

A length of the opening 170H in the X-axis direction may be different from a length thereof in the Y-axis direction. The length of the opening 170H in the X-axis direction may be greater than the length thereof in the Y-axis direction. Accordingly, the X-axis direction may be referred to as a longitudinal direction of the opening 170H, and the Y-axis direction may be referred to as a width direction of the opening 170H.

The length of the opening 170H in the X-axis direction may be different from a width of the electrode lead EL (i.e., a length of the electrode lead EL in the X-axis direction). The length of the opening 170H in the X-axis direction may be greater than the width of the electrode lead EL (i.e., the length of the electrode lead EL in the X-axis direction). Accordingly, the opening 170H may expose both the electrode lead EL and the bus bar BB, thus allowing OCT-based inspection of the electrode lead EL and the bus bar BB.

A length of each of the first and second inner walls 170S1 and 170S2 may be different from a length of each of the third and fourth inner walls 170S3 and 170S4. The lengths of each of the first and second inner walls 170S1 and 170S2 may be greater than a length of each of the third and fourth inner walls 170S3 and 170S4. The length of each of the first and second inner walls 170S1 and 170S2 may be different from the width of the electrode lead EL (i.e., the length of the electrode lead EL in the X-axis direction). The lengths of the first and second inner walls 170S1 and 170S2 may be greater than the width of the electrode lead EL (i.e., the length of the electrode lead EL in the X-axis direction).

More specifically, the opening 170H may include first to third portions P1, P2, and P3 disposed in the X-axis direction. The first portion P1 of the opening 170H may expose a surface of the bus bar BB. The second portion P2 of the opening 170H may expose a surface of the electrode lead EL. The third portion P3 of the opening 170H may expose a surface of the bus bar BB. However, embodiments are not limited thereto, and the positions of the electrode lead EL and the bus bar BB may be reversed, and in this case, the first and third portions P1 and P3 of the opening 170H may expose the electrode lead EL, and the second portion P2 of the opening 170H may expose the surface of the bus bar BB.

The first portion P1 of the opening 170H may overlap the bus bar BB (e.g., in the Z-axis direction). The second portion P2 of the opening 170H may overlap the bus bar BB and the electrode lead EL (e.g., in the Z-axis direction). The third portion P3 of the opening 170H may overlap the bus bar BB (e.g., in the Z-axis direction). Accordingly, a depth measured through the first portion P1 of the opening 170H may be different from a depth measured through the second portion P2 of the opening 170H. That is, the depth measured through the first portion P1 of the opening 170H may be greater than the depth measured through the second portion P2 of the opening 170H. In addition, a depth measured through the third portion P3 of the opening 170H may be different from the depth measured through the second portion P2 of the opening 170H. That is, the depth measured through the third portion P3 of the opening 170H may be greater than the depth measured through the second portion P2 of the opening 170H.

The scanner head 120 may be configured to scan a portion of the bus bar BB and a portion of the electrode lead EL, which are exposed through the opening 170H of the masking jig 170, by the inspection beam IB as indicated by a scanning path SP. When the portion of the bus bar BB and the portion of the electrode lead EL are scanned, the first and second inner walls 170S1 and 170S2 of the masking jig 170 may be also scanned, thus allowing the positions of the first and second inner walls 170S1 and 170S2 to be identified.

Although FIG. 3 illustrates that first and second coordinates of the first and second inner walls 170S1 and 170S2 are determined by performing scanning once, the illustration of FIG. 3 is only an example and is not intended to limit the technical idea of the present invention in any sense. The first coordinates of the first inner wall 170S1 may be determined by first scanning, and the second coordinates of the second inner wall 170S2 may be determined by second scanning.

The reflective beam RB may sequentially pass through the lenses 125 and 127, the first and second scanning mirrors 123 and 124, the dichroic mirror 121, the first and second scanning mirrors 138 and 139, and the beam splitter 133 and thereafter reach the detector 137 .

The detector 137 may be configured to generate an inspection signal IS, based on the reflective beam RB and the reference beam RFB. The detector 137 may include, for example, a charge-coupled device (CCD) camera, a complementary metal oxide semiconductor (CMOS) image sensor, or the like. The detector 137 may be configured to transmit the inspection signal IS to the processor 140.

The processor 140 may be configured to determine 3D shapes of the electrode lead EL, the bus bar BB, and the masking jig 170, based on the inspection signal IS. The processor 140 may be configured to collect opening data OD. The processor 140 may be configured to collect the opening data OD, based on the 3D shapes of the electrode lead EL, the bus bar BB, and the masking jig 170. The opening data OD may include the first coordinates of the first inner wall 170S1 and the second coordinates of the second inner wall 170S2. When a portion of the bus bar BB and a portion of the electrode lead EL are inspected through the opening 170H of the masking jig 170, the first coordinates of the first inner wall 170S1 and the second coordinates of the second inner wall 170S2 may be determined.

The processor 140 may be configured to collect center line data CLD indicating a center line 170CL of the opening 170H, based on the opening data OD. The center line data CLD may include coordinates of the center line 170CL. The processor 140 may be configured to calculate the coordinates of the center line 170CL of the opening 170, based on the opening data OD. The coordinates of the center line 170CL of the opening 170 may be averages of the first coordinates of the first inner wall 170S1 and the second coordinates of the second inner wall 170S2. The processor 140 may be configured to transmit the opening data OD and the center line data CLD to the controller 150.

The controller 150 may be configured to control overall operations of the first beam source 110, the scanner head 120, and the servo motor 160. The controller 150 may be configured to generate signals for controlling the oscillation of the first beam source 110, a chopping frequency of the welding beam WB, an intensity of the welding beam WB, the driving of the first and second scanning mirrors 123 and 124, and the driving of the servo motor 160.

The controller 150 may be configured to generate signals for controlling the servo motor 160 and the scanner head 120 to weld the electrode lead EL and the bus bar BB, based on the opening data OD or the center line data CLD. The controller 150 may be configured to control the movement of the scanner head 120 by the servo motor 160 and the driving of the first and second scanning mirrors 123 and 124.

As a non-limiting example, the controller 150 may be a programmable logic controller (PLC). The PLC is a special type of microprocessor-based controller that stores instructions using a programmable memory and implements functions such as logic, sequencing, timing, counting and an arithmetic operation to control machines and processes. It is easy to operate and program the PLC. The controller 150 may include a power supply, a central process unit (CPU), an input interface, an output interface, a communication interface, and memory devices.

Here, the processor 140 and the controller 150 may be implemented as hardware, firmware, software, or a combination thereof. For example, the processor 140 and the controller 150 may be computing devices such as a workstation computer, a desktop computer, a laptop computer, and a tablet computer. The processor 140 and the controller 150 may be simple controllers, microprocessors, complex processors such as a CPU or a GPU, processors configured by software, dedicated hardware, or firmware. The processor 140 and the controller 150 may be implemented, for example, by a general-purpose computer or application-specific hardware such as a digital signal process (DSP), a field-programmable gate array (FPGA) or an application specific integrated circuit (ASIC).

According to some embodiments, operations of the processor 140 and the controller 150 may be implemented as instructions stored on machine-readable media that are readable and executable by one or more processors. Here, the machine-readable media may include an arbitrary mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may also be configured to perform the above-described operations of the processor 140 and the controller 150, or processes described below. However, the above description is provided only for convenience of description, and it should be understood that the above-described operations of the processor 140 and the controller 150 may be performed by a computing device, a processor, a controller, or other devices for executing firmware, software, routines, instructions, etc.

The servo motor 160 may be configured to translate the scanner head 120. The servo motor 160 may be configured to move the scanner head 120 in a vertical direction (i.e., a working distance direction). The welding beam WB may be focused on the electrode lead EL and the bus bar BB due to the vertical movement of the scanner head 120. That is, the scanner head 120 may be moved in the vertical direction such that a focus of the welding beam WB is on the electrode lead EL and the bus bar BB. The servo motor 160 may be configured to move the scanner head 120 in a horizontal direction. Due to the horizontal movement of the scanner head 120, the electrode lead EL and the bus bar BB may be scanned by the welding beam WB and thus be welded together.

### (Second Embodiment)

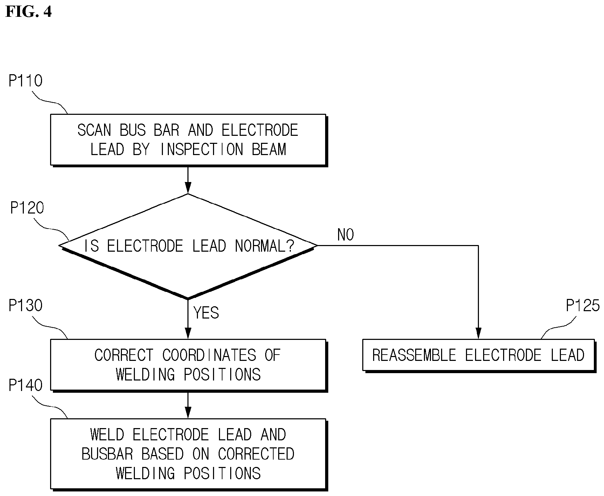

FIG. 4 is a flowchart of a method of manufacturing a secondary battery according to embodiments.

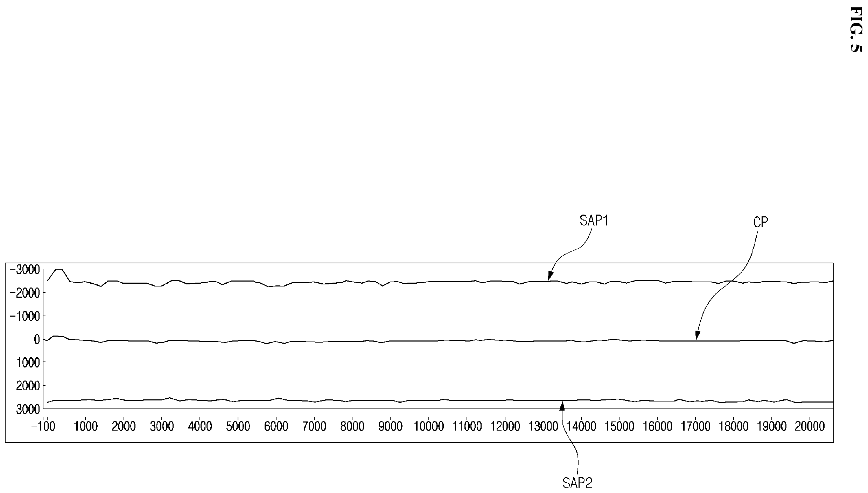

FIG. 5 is a diagram for describing a method of manufacturing a secondary battery according to embodiments. In FIG. 5, values on horizontal and vertical axes represent coordinates of sampling points SAP1 on a first inner wall 170S1, sampling points SAP2 of a second inner wall 170S2, and points CP on a center line 170CL, and have arbitrary units.

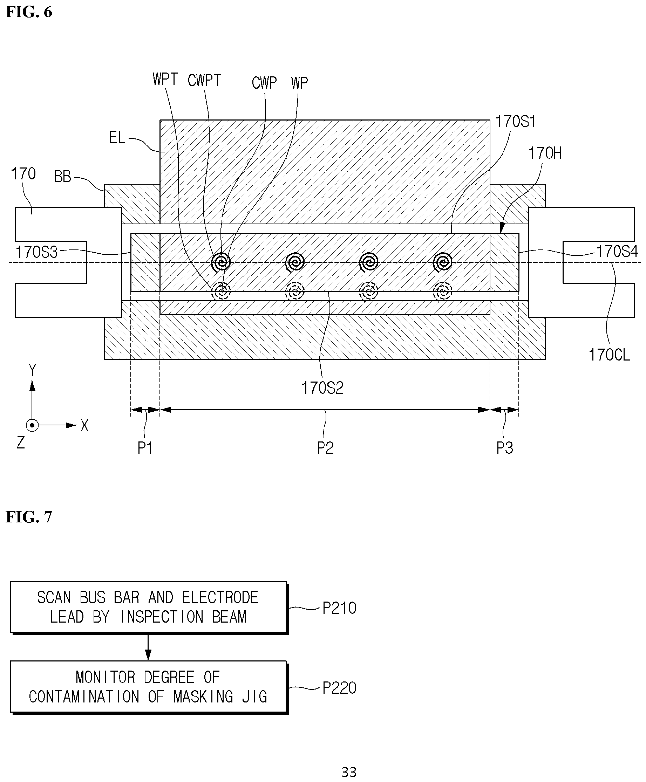

FIG. 6 is a diagram for describing a method of manufacturing a secondary battery according to embodiments.

Referring to FIGS. 1 and 3 to 5, in P110, the bus bar BB and the electrode lead EL may be scanned by the inspection beam IB. Opening data OD may be collected by scanning the bus bar BB and the electrode lead EL. To collect the opening data OD, the inspection beam IB may be moved along a scanning path SP. Scanning paths SP1 and SP2 may include a zigzag line (e.g., a triangular waveform line). A sampling frequency of scanning of the inspection beam IB may be in a range of several tens of kHz to several hundreds of kHz.

A Z field measurement area (i.e., depth measurement limit) of the inspection beam IB may be in a range of several mm to several tens of mm. The Z field measurement area (i.e., depth measurement limit) of the inspection beam IB may be in a range of about 3 mm to about 12 mm. A resolution of the inspection beam IB in the Z-axis direction may be in a range of about 1 µm to about 100 µm.

A diameter of an XY field measurement area (i.e., a horizontal scanning range) of the inspection beam IB may be in a range of several mm to several tens of mm. A resolution of an XY plane of the inspection beam IB may be in a range of about 1 µm to about 100 µm. Here, the XY plane may be a scanning plane of the inspection beam IB, and the Z axis may be substantially perpendicular to the XY plane.

An inspection signal IS may be generated by scanning the bus bar BB and the electrode lead EL by the inspection beam IB. The processor 140 may determine 3D shapes of the bus bar BB and the electrode lead EL according to the inspection signal IS. The processor 140 may be configured to collect the opening data OD based on the 3D shapes of the bus bar BB and the electrode lead EL. The processor 140 may be configured to collect center line data CLD, based on the opening data OD.

The opening data OD may include first coordinates of the first inner wall 170S1 and second coordinates of the second inner wall 170S2. Depths of the first and second inner walls 170S1 and 170S2 may be less than depths of the bus bar BB and the electrode lead EL. In scanning of the bus bar BB and the electrode lead EL, by defining boundaries with a depth less than the threshold (or a height above the threshold) as the first and second inner walls 170S1 and 170S2, the first coordinates of the first inner wall 170S1 and the second coordinates of the second inner wall 170S2 may be determined. FIG. 5 illustrates the sampling points SAP1 on the first inner wall 170S1, the sampling points SAP2 on the second inner wall 170S2, and the points CP on the center line 170CL calculated from the sampling points SAP1 and SAP2.

The first coordinates of the first inner wall 170S1, the second coordinates of the second inner wall 170S2, and the coordinates of the center line 170CL may be located on a scanning plane and thus may include X-axis direction coordinates and Y-axis direction coordinates.

Next, in P120, the quality of the electrode lead EL may be identified. When the electrode lead EL is defective (NO), welding the electrode lead EL and the bus bar BB may not be performed and the electrode lead EL and the bus bar BB may be classified as defective. In P125, the electrode lead EL and the bus bar BB classified as defective may be inspected and reassembled by a worker and/or an inspection system after the end of welding sequence.

A defect of the electrode lead EL may be a lead insertion failure defect, a lead lifting defect, a lead cutting defect, or a lead bending defect. A defect of the electrode lead EL may be identified, based on the 3D shapes of the electrode lead EL and the busbar BB that are exposed through the opening 170H.

A lead insertion failure should be understood to mean incomplete insertion of the electrode lead EL between the bus bar BB and the masking jig 170. For example, in a design in which three electrode leads EL are welded to the bus bar BB, an opening failure may occur in some of the battery cells when only two electrode leads EL are inserted between the bus bar BB and the masking jig 170. It may be determined that the battery cell assembly includes a lead insertion failure defect when the difference in depth between the first and third portion P1 and P3 through which the bus bar BB is exposed and the second portion P2 through which the electrode lead EL is exposed is less than a critical lower limit.

For example, the critical lower limit may be about 27 µm when three electrode leads EL each have a thickness of about 10 µm, the sum of the thicknesses of the three electrode leads EL is about 30 µm, and a tolerance is about 3 µm. Accordingly, it may be determined that the battery cell assembly includes the lead insertion failure defect when the difference in depth between the first and third portions P1 and P3 and the second portion P2 through which the electrode lead EL is exposed is less than about 27 µm.

The lead lifting defect and the lead bending defects should be understood to mean incomplete adherence between the busbar BB and the electrode lead EL even when pressurized by the masking jig 170. In general, the electrode lead EL includes a bent part to be welded with the bus bar BB and thus lead lifting may occur due to a restoring force of the electrode lead EL. It may be determined that the battery cell assembly includes the lead lifting failure or the lead bending failure when the difference in depth between the first and third portions P1 and P3 through which the bus bar BB is exposed and the second portion P2 through which the electrode lead EL is exposed exceeds a critical upper limit.

For example, the critical upper limit may be about 33 µm when each of three electrode leads EL is about 10 µm, the sum of the thicknesses of the three electrode leads EL is about 30 µm, and a tolerance is about 3 µm. Thus, it may be determined that the battery cell assembly includes the lead lifting failure or the lead bending failure when the difference in depth between the first and third portions P1 and P3 and the second portion P2 through which the electrode lead EL is exposed is about 33 µm or more.

It may be determined that there is a lead cutting defect when a height profile of the second portion P2 changes discontinuously.

A defect of the electrode lead EL such as a lead insertion failure, lead lifting, a lead cutting defect, or lead bending may be identified by the processor 140. The processor 140 may be configured to transmit data of the defect of the electrode lead EL to the controller 150. Accordingly, welding of the electrode lead EL, which is defective, and the bus bar BB may not be performed, and the defect of the electrode lead EL may be fixed by reassembling the electrode lead EL and the bus bar BB, and thus the yield and productivity of secondary batteries may be enhanced.

Referring to FIGS. 1, 4 and 6, in P130, when it is determined in P120 that the electrode lead EL is normal (YES), the coordinates of welding positions WP may be corrected. According to embodiments, each of welding patterns WPT may include a spiral line and the welding positions WP may be the centers of the welding patterns WPT. The welding positions WP may be determined at an initial stage (i.e., before the inspection of the bus bar BB and the electrode lead EL), based on standard models of the bus bar BB and the electrode lead EL fixed by the masking jig 170. The welding positions WP may be parts of the electrode lead EL and the bus bar BB to be welded together by the welding beam WB. The welding positions WP at the initial stage may be parts of the bus bar BB and the electrode lead EL to be welded in an ideal case with no error in the bus bar BB, no error in the electrode lead EL, no error in an assembly process of the electrode lead EL and the bus bar BB, and no error in a position at which pressure is applied by the masking jig 170.

The corrected welding positions CWP may be determined by correction of the welding positions WP. The welding positions WP may be corrected by the controller 150. That is, the corrected welding positions CWP may be calculated by the controller 150. Each of the corrected welding positions CWP may be on the center line 170CL of the opening 170H. The corrected welding patterns CWPT may have substantially the same shape as the welding patterns WPT. The corrected welding patterns CWPT may be provided by parallel movement of the welding patterns WPT. The centers of the corrected welding patterns CWPT may be the corrected welding positions CWP.

Next, in P140, the electrode lead EL and the bus bar BB may be welded based on the corrected welding positions CWP. The welding of the electrode lead EL and the bus bar BB may include scanning the electrode lead EL and the bus bar BB by a welding beam WB along a spiral line to form the corrected welding patterns CWPT. When interference occurs between the welding beam WB and the masking jig 170 due to tolerance, a defect may occur due to a welding failure or weak welding between the electrode lead EL and the bus bar BB. According to embodiments, the electrode lead EL and the bus bar BB are welded based on the corrected welding positions CWP, and thus, a welding failure or weak welding of the electrode lead EL and the bus bar BB are relieved or prevented and the reliability of manufacturing a secondary battery increases.

### (Third Embodiment)

Referring to FIGS. 1, 4, and 6, in P130, the electrode lead EL and the bus bar BB may be welded based on the center line data CLD. In this example, the electrode lead EL and the bus bar BB may be directly scanned by the welding beam WB, based on the center line data CLD without correcting a welding line, based on the center line data CLD. The controller 150 is configured to perform many operations in addition to the correction of the welding positions WP. Because the controller 150 generates a signal for performing welding directly using the center line data CLD, computing power of the controller 150 may be reduced and the continuity and reliability of the process may be enhanced.

### (Fourth Embodiment)

FIG. 7 is a flowchart of a method of manufacturing a secondary battery according to embodiments.

Referring to FIG. 7, the bus bar BB and the electrode lead EL may be scanned by the inspection beam IB. P210 is substantially the same as P110 of FIG. 4 and thus a redundant description thereof is omitted here.

Referring to FIGS. 1, 5, and 7, in P220, a degree of contamination of the masking jig 170 may be monitored. The degree of contamination of the masking jig 170 may be monitored based on a profile of the opening 170H of the masking jig 170. When the electrode lead EL and the bus bar BB are welded, the masking jig 170 may be contaminated due to spattering of a metal material. When the degree of contamination of the masking jig 170 is excessively high, weak welding or a welding failure between the bus bar BB and the electrode lead EL may be caused due to incomplete contact between the bus bar BB or the electrode lead EL or the bus bar BB and the electrode lead EL may be damaged due to the masking jig 170.

When the masking jig 170 is contaminated, profiles of the first and second inner walls 170S1 and 170S2 of the masking jig 170 (or a profile of the opening 170H of the masking jig 170) may change.

According to embodiments, the masking jig 170 may be monitored based on the roughness of the profiles of the first and second inner walls 170S1 and 170S2 of the masking jig 170. The processor 140 and/or the controller 150 may be configured to generate an alarm for cleaning the masking jig 170 when the roughness of the profiles of the first and second inner walls 170S1 and 170S2 exceeds a threshold value.

According to other embodiments, the masking jig 170 may be monitored based on a distance (e.g., an average distance) between the first and second inner walls 170S1 and 170S2. The processor 140 and/or the controller 150 may be configured to generate an alarm for cleaning the masking jig 170 when the distance (e.g., the average distance) between the first and second inner walls 170S1 and 170S2 is less than a threshold value.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a masking jig configured to fix an electrode lead and a bus bar and including a plurality of inner walls defining an opening exposing the electrode lead and the bus bar;
a first beam source configured to generate a welding beam;
a second beam source configured to generate an inspection beam;
a scanner head configured to direct the welding beam and the inspection beam to the electrode lead and the bus bar;
a servo motor configured to move the scanner head;
a detector configured to detect a reflective beam that is part of the inspection beam reflected from the electrode lead and the bus bar;
a processor configured to collect opening data, based on an inspection signal generated by the detector, the opening data including first coordinates of a first inner wall and second coordinates of a second inner wall among the plurality of inner walls; and
a controller configured to control the servo motor, based on the opening data of the electrode lead and the bus bar.

2. The secondary battery manufacturing apparatus of claim 1, wherein the processor is further configured to calculate coordinates of a center line of the opening, based on the opening data.

3. The secondary battery manufacturing apparatus of claim 2, wherein the coordinates of the center line of the opening are averages of the first coordinates of the first inner wall and the second coordinates of the second inner wall.

4. The secondary battery manufacturing apparatus of claim 2, wherein the controller is further configured to correct welding positions of the electrode lead and the bus bar, based on the coordinates of the center line, and
wherein the welding positions comprise positions of portions of the electrode lead and the bus bar to be welded by the welding beam.

5. The secondary battery manufacturing apparatus of claim 1, wherein a length of the opening is greater than a width of the electrode lead.

6. The secondary battery manufacturing apparatus of claim 1, wherein the scanner head is further configured to scan the electrode lead and the bus bar by the welding beam along a plurality of spiral lines.

7. The secondary battery manufacturing apparatus of claim 6, wherein a center of each of the plurality of spiral lines is on a center line of the opening of the masking jig.

8. A secondary battery manufacturing method comprising:
scanning a bus bar and an electrode lead through an opening of a masking jig;
correcting coordinates of welding positions of the bus bar and the electrode lead to calculate corrected welding positions; and
welding the bus bar and the electrode lead, based on the corrected welding positions,
wherein the masking jig is configured to press the electrode lead and the bus bar.

9. The second battery manufacturing method of claim 8, wherein the masking jig comprises a first inner wall and a second inner wall defining the opening, and
wherein lengths of the first and second inner walls are greater than a width of the electrode lead.

10. The second battery manufacturing method of claim 9, wherein the scanning of the bus bar and the electrode lead comprises collecting opening data about the opening of the masking jig, and
wherein the opening data comprises first coordinates of the first inner wall of the opening and second coordinates of the second inner wall of the opening.

11. The secondary battery manufacturing method of claim 10, wherein the welding positions are corrected based on center line data including coordinates of a center line of the masking jig.

12. The secondary battery manufacturing method of claim 11, wherein the center line data is collected based on the opening data.

13. The secondary battery manufacturing method of claim 11, wherein the coordinates of the center line are averages of the first coordinates of the first inner wall and the second coordinates of the second inner wall.

14. The secondary battery manufacturing method of claim 11, wherein the corrected welding positions are on the center line.

15. The second battery manufacturing method of claim 8, further comprising determining a defect of the electrode lead, based on a three-dimensional image of the bus bar and the electrode lead,
wherein the three-dimensional image of the bus bar and the electrode lead is captured by scanning the bus bar and the electrode lead by an inspection beam.

16. The secondary battery manufacturing method of claim 15, wherein the opening comprises a first portion exposing a surface of the bus bar and a second portion exposing a surface of the electrode lead, and
wherein the defect of the electrode lead is determined based on a difference between a depth measured in the first portion and a depth of measured in the second portion.

17. A secondary battery manufacturing method comprising:
scanning a bus bar and an electrode lead through an opening of a masking jig by an inspection beam, wherein the masking jig comprises a first inner wall and a second inner wall defining the opening; and
monitoring contamination of the masking jig based on profiles of the first and second inner walls.

18. The secondary battery manufacturing method of claim 17, wherein the contamination of the masking jig is monitored based on roughness of the profiles of the first and second inner walls.

19. The secondary battery manufacturing method of claim 17, wherein the contamination of the masking jig is monitored based on a distance between the first and second inner walls.
